# EUROPÄISCHE PATENTSCHRIFT

(11) **EP 0 896 789 B1**
(45) Veröffentlichungstag und Bekanntmachung des Hinweises auf die Patenterteilung: **06.08.2003**
(21) Anmeldenummer: 98114457.9
(22) Anmeldetag: 01.08.1998
(51) Int. Cl.: A01D 45/02

(54) **Maisernte-Vorsatz zum Anbau an eine selbstfahrende Erntemaschine**
Cornheader for mounting on a self-propelled harvester
Tablier de mais pour montage sur moissonneuse automotrice

(30) Priorität: 12.08.1997 DE 19734747
(43) Veröffentlichungstag der Anmeldung: 17.02.1999
(73) Patentinhaber: CLAAS Saulgau GmbH, 88340 Bad Saulgau (DE)
(72) Erfinder: Rauch, Hans, 88348 Saulgau (DE)

(56) Entgegenhaltungen:
- EP-A- 0 712 567
- DE-A- 3 726 967
- FR-A- 2 078 182
- GB-A- 443 013
- US-A- 2 947 133
- US-A- 3 333 405
- US-A- 3 470 682
- US-A- 4 009 557
- US-A- 4 965 991

## Beschreibung

Die Erfindung betrifft ein Maisernte-Vorsatzgerät der im Anspruch 1 bezeichneten Gattung. Ein Gerät dieser Art ist aus der europäischen Patentschrift 0 712 567 bekannt. Es handelt sich um eine reihenunabhängig arbeitende Mäh- und Einzugsvorrichtung für einen selbstfahrenden Feldhäcksler. Dabei wird die gesamte Maispflanze fein gehäckselt, um als Silagefutter eingelagert zu werden. Die Vorrichtung weist mehrere über die gesamte Arbeitsbreite verteilte Förder-Doppelscheiben auf, jede bestehend aus zwei koaxial in einem Abstand voneinander angeordneten Scheiben, die am Umfang regelmäßig verteilte spezielle Aussparungen bzw. Zähne haben. Unter jeder Doppelscheibe läuft mit größerer Drehzahl eine Messerscheibe um, welche die Stengel, die bei der Fahrbewegung von den Aussparungen der Förderscheibe aufgenommen werden, knapp über dem Boden abtrennt. Die Pflanzen wandern dann im wesentlichen stehend dem Umfang der Förderscheiben entlang zum Einzugsbereich dieser Vorrichtung, worunter insbesondere der zwischen zwei benachbarten Förderscheiben gebildete Zwickelbereich zu verstehen ist.

Die traditionellen Maisgebisse haben Einzugskanäle, die nur Pflanzen abschneiden und einziehen können, die einigermaßen in Fahrtrichtung vor der Einzugskanalmündung stehen. Der Querabstand der Einzugskanäle muß daher ziemlich genau dem Pflanzreihenabstand entsprechen. Demgegenüber können die Förderscheiben des oben beschriebenen Vorsatzgeräts an jeder Stelle ihres frontalen Umfangsbogens Stengel aufnehmen, so daß diese nicht in Reihen gepflanzt sein müssen. Der praktische Vorteil besteht darüber hinaus darin, daß diese Maschinen bei Reihenpflanzungen auch quer oder schräg zur Reihenrichtung in den Bestand einfahren können.

Die Erfindung befaßt sich mit dem Problem, die Maiskolben abzupflücken und gesondert von der übrigen Maispflanze zu verwerten, z. B. durch Ausdreschen der Maiskörner. Bekannt sind bisher aber nur Mais-Pflückvorsätze, die in Anlehnung an die erwähnten Maisgebisse streng reihenabhängig funktionieren, wie z. B. der Pflückvorsatz nach der deutschen Patentschrift DE 30 29 424.

Die der Erfindung zugrunde liegende Aufgabe wird darin gesehen, ein Maisernte-Vorsatzgerät vorzuschlagen, daß reihenunabhängig mähen und die Maiskolben pflücken und getrennt von den übrigen Pflanzenteilen weitertransportieren kann.

Diese Aufgabe wird erfindungsgemäß durch die kennzeichnenden Merkmale des Anspruchs 1 gelöst. Danach sind einem Stengelmähwerk der einleitend geschilderten Art Maiskolben-Pflückaggregate nachgeordnet. Das Mähwerk hat um hochstehende Achsen umlaufende Messerscheiben und koaxial darüberliegende gezahnte Förderscheiben, insbesondere Doppelscheiben, welche die abgetrennten stehenden Pflanzen zu einzelnen Einzugsbereichen fördern, und jedem Einzugsbereich ist ein Pflückaggregat zugeordnet.

Um die in die Randaussparungen der Förderscheiben eingepreßten Stengel an einer bestimmten Stelle des Umlaufweges schnell und wirkungsvoll herauszulösen, sind schon sog. Ausräumscheiben bekannt. Das sind ebenfalls gezahnte kleinere Scheiben, welche unter oder über den Förderscheiben bzw. in den Doppelscheiben so gelagert sind, daß ihr Zahnkranz den Zahnkranz der Förderscheiben möglichst unter einem rechten Winkel schneidet. Es wird vorgeschlagen, daß jeder Förderscheibe eine solche Ausräumscheibe zugeordnet ist, welche das von der Förderscheibe angeförderte Erntegut als Zwischenförderer einem Pflückaggregat zuführt. Das gibt vorteilhafterweise eine größere Freiheit bei der Anordnung des Pflückaggregats. Beispielsweise kann dieses dank der zwischenfördernden Ausräumscheibe schräg oder sogar quer zur Fahrtrichtung gelegt werden, wodurch es gelingt, die Länge des Vorsatzgerätes auf ein Maß zu verkürzen, bei dem sich keine Stabilitätsprobleme für das Gesamtfahrzeug ergeben.

Pflückaggregate sind zweckmäßigerweise so konstruiert, daß sie die Pflanzen aktiv einziehen. Dies geschieht z. B. durch kegelförmige, mit korkenzieherartigen Schneckengängen versehene rotierende Einzugspitzen. Es wird alternativ vorgeschlagen, daß eine derartige Einzugseinrichtung eines Pflückaggregats an die Stelle einer Ausräumscheibe tritt und als Ausräumer wirkend in den Laufkreis der zugeordneten Förderscheibe eintaucht. Somit holt sich das Pflückaggregat die Stengel selbst aus den Randaussparungen der Förderscheiben heraus.

Die Pflückaggregate haben üblicherweise je einen zwischen zwei Kanten gebildeten Pflückspalt. Er ist so eng, daß zwar die Stengel und Blätter der Maispflanze hindurchgehen, nicht aber die Kolben. Diese werden somit abgerissen, wenn die Pflanze durch den Pflückspalt gezogen wird. Um eine möglichst ungehinderte Überleitung des Ernteguts von den Förderscheiben in die Pflückspalte zu gewährleisten, wird vorgeschlagen, daß die Pflückspalte sich etwa in Richtung einer Tangente an den Laufkreis der Förderscheiben oder Ausräumscheiben, soweit solche vorhanden sind, erstrecken.

Zunächst bietet es sich wohl an, jeder Förderscheibe ein eigenes Pflückaggregat zuzuordnen. Demgegenüber liegt eine wesentliche Vereinfachung darin, daß zwei nebeneinanderliegende Förderscheiben des Mähwerks gegensinnig rotieren und ihre beiden zusammenlaufenden Gutströme gemeinsam von einem hinter dem Einlaufzwickel der Förderscheiben angeordneten Pflückaggregate aufgenommen werden. Dieses muß zwar die doppelte Menge in der gleichen Zeit verarbeiten, andererseits halbiert sich die Anzahl der notwendigen Pflückaggregate. Damit vereinfacht sich die Antriebseinrichtung für die Pflückaggregate und auch an diesen selbst ist eine nicht unerhebliche Gewichtseinsparung zu erwarten. Bei breiten Vorsatzgeräten mit einer geraden Anzahl Förderscheiben kann sich diese Anordnung - zwei Förderscheiben und ein gemeinsames Pflückaggregat - beliebig oft wiederholen.

Bekannte Pflückaggregate weisen meist zwei unter dem Pflückspalt angeordnete Pflückwalzen auf, deren vordere Abschnitte als Einzugspitzen ausgebildet sind. Wenn nun zwei gegenläufige Förderscheiben vorliegen, die ein gemeinsames Pflückaggregat speisen, dann können die beiden Einzugspitzen tangential in den Laufkreis der jeweils zugeordneten Förderscheibe eintauchen und somit beide hinsichtlich ihrer jeweiligen Förderscheibe als Ausräumer wirken. Arbeitet dagegen nur eine Förderscheibe auf ein Pflückaggregat, so wird nur eine der beiden Einzugspitzen in den Laufkreis eintauchen und als Ausräumer wirken, während die andere Einzugspitze außerhalb des Laufkreises liegt. In diesem letzteren Fall wird vorgeschlagen, daß die außerhalb des Laufkreises liegende Einzugspitze länger als die andere und ihre Einzugwirkung dadurch erhöht ist.

Andererseits wird zur Vereinfachung vorgeschlagen, daß die Pflückaggregate nur je eine Pflückwalze aufweisen, die mit einer feststehenden Wand, d. h. einer Teilummantelung der Pflückwalze zusammenwirkt.

Um die gepflückten Maiskolben bzw. die noch über den Pflückspalt hinausstehenden Pflanzen in Spaltrichtung weiterzufördern, sind im oberen Bereich der Pflückaggregate eine oder zwei endlose Förderketten angeordnet. Anstelle dieser Ketten können auch Förderschnecken vorgesehen sein.

Wie bei anderen Maispflückern bekannt, sollen auch bei dem reihenlos wirkenden Vorsatzgerät die abgepflückten Planzenteile nach unten ausgeworfen werden. Um aber Störungen bei den Bodenbearbeitungsgeräten zu vermeiden und die Verrottung der Stengelteile zu beschleunigen, sind geeignete Einrichtungen vorzusehen, welche diese auszuwerfenden Pflanzenteile zerkleinern. Eine zweckmäßige Ausführungsform besteht darin, daß insbesondere die einzige Pflückwalze eines Pflückaggregats in Achsebene verlaufende Schlagplatten aufweist, die mit senkrecht zu der Achse feststehenden Messern zusammenwirken, um die abgepflückten Pflanzen vor dem Auswerfen nach unten zu zerstückeln. Es können aber auch unter den Pflückaggregaten Zerkleinerungseinrichtungen für die durch den Pflückspalt durchgezogenen kolbenlosen Maispflanzen vorgesehen sein.

Nachdem somit vielerlei Vorschläge zur Bauart und Anordnung der Pflückaggregate und zum Zusammenwirken derselben mit den Förderscheiben gemacht worden sind, soll nun noch die fehlende Förderstrecke von den Pflückaggregaten, zu der das Vorsatzgerät tragenden Erntemaschine betrachtet werden. Grundsätzlich wird man sich einer im hinteren Bereich des Vorsatzgerätes angeordneten Querförderschnecke bedienen, welche die abgepflückten Maiskolben von den Pflückaggregaten beider Seiten zur Mitte fördert, von wo sie gesammelt in die Erntemaschine überführt werden. Wenn die Pflückaggregate in Fahrtrichtung oder schräg dazu angeordnet sind, wird es keine Schwierigkeiten machen, die Maiskolben in den Fördertrog hinein abzuwerfen. Bei querliegenden Pflückaggregaten kann es erforderlich sein, eine zusätzliche Zwischenfördereinrichtung, z. B. ebenfalls eine Förderschnecke, einzusetzen, um mit den Maiskolben die große Querförderschnecke zu erreichen. In der Erntemaschine können die Maiskolben zur Gewinnung von Körnermais ausgedroschen oder auch nur abgelagert werden.

Ausführungsbeispiele der Erfindung werden nachfolgend anhand der schematischen Zeichnung erläutert. Im einzelnen zeigt
- Fig. 1: die Seitenansicht und
- Fig. 2: die Draufsicht der linken Hälfte eines Vorsatzgeräts zum Mähen und Pflücken von Mais mit Förderscheiben, denen je eine Ausräumscheibe und ein Pflückaggregat zugeordnet ist,
- Fig. 3: die Seitenansicht und
- Fig. 4: die Draufsicht eines ähnlichen Vorsatzgeräts, bei dem anstelle von Ausräumscheiben die Einzugspitzen der Pflückaggregate das Ausräumen der Förderscheiben bewirken,
- Fig. 5: die hälftige Draufsicht eines weiteren Vorsatzgeräts, bei dem zwei Einzugscheiben ein Pflückaggregat speisen, und
- Fig. 6: als Beispiel zweier weiterer Ausführungsformen die Draufsicht eines Vorsatzgeräts, wobei in der rechten Hälfte das Pflückaggregat schräg zur Fahrtrichtung und in der linken Hälfte das Pflückaggregat senkrecht zur Fahrtrichtung angeordnet ist.

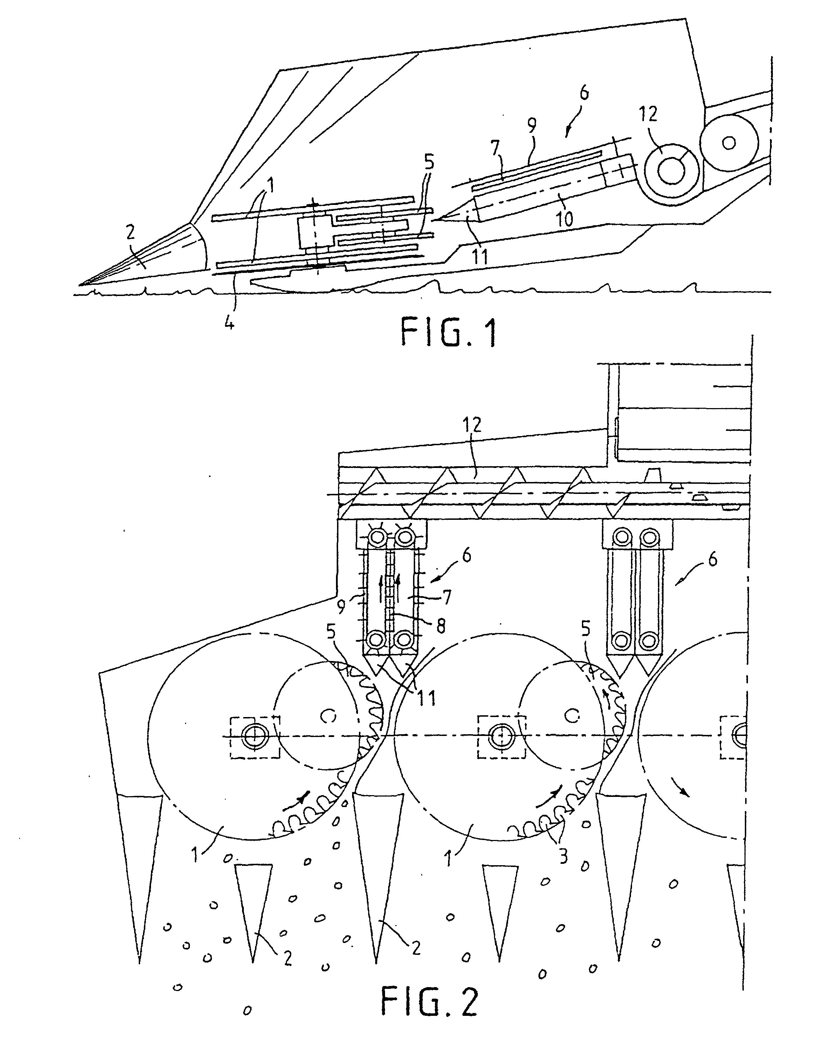

Das Vorsatzgerät nach den Figuren 1 und 2 hat nebeneinander insgesamt fünf Förderscheiben 1. Die Gesamtarbeitsbreite ist durch Stengelteiler 2 in zehn Arbeitsbreitenabschnitte geteilt, je zwei pro Förderscheibe. Wie Fig. 1 zeigt, sind die Förderscheiben 1 als Doppelscheiben ausgebildet, die um eine gemeinsame Achse rotieren und einen Abstand voneinander haben. An ihrem Rand weisen die Förderscheiben Ausnehmungen 3 auf, die so gestaltet sind, daß sie die Maisstengel, die mittels einer ebenfalls koaxialen Messerscheibe 4 abgeschnitten werden, beim Mitnehmen halten, das Ausräumen der Stengel aber nicht behindern. Zwischen den Förderscheiben 1 sind zwei zueinander koaxiale gezackte Ausräumscheiben 5 an einem Lagerarm so gelagert, daß ihre Laufkreise die Laufkreise der Förderscheiben in einem stumpfen Winkel schneiden. Die Bereiche, in denen sich zwei benachbarte Förderscheiben am nächsten kommen bzw. die frontseitigen und rückseitigen, von den Förderscheiben gebildeten Zwickel bilden jeweils gemeinsam die Einzugsbereiche des Mähwerks.

Den Einzugsbereichen nachgeordnet ist je ein Pflückaggregat 6. Es besteht aus zwei Pflückplatten 7, die zwischen sich einen Pflückspalt 8 bilden. Darüber liegen zwei Kettenförderer 9, welche die abgepflückten Maiskolben nach hinten transportieren. Unter den Pflückplatten 7 sind zwei parallele Pflückwalzen 10 gelagert, deren zylindrischer Walzenkörper Längsleisten, Schlagplatten oder dergleichen aufweist und vorne eine kegelförmige Einzugspitze 11 hat, an der Schneckenwindungen angebracht sind. Der Pflückspalt 8 verläuft genau in Fahrtrichtung und bildet in seiner Verlängerung die Tangente an die Ausräumscheibe 5. Auf diese Weise wird erreicht, daß der Gutstrom genau zwischen die Einzugspitzen 11 läuft. Diese fördern die Maispflanzen weiter, bis sie von den zylindrischen Walzenkörpern 10 erfaßt und nach unten gezogen werden. Die oberen Pflanzenteile mit den Maiskolben werden gleichzeitig von dem Kettenförderer 9 weiter in den Pflückspalt 8 hineingeleitet. Schließlich bringen die Kettenförderer die abgepflückten Kolben weiter nach hinten, bis sie dort in den Trog einer Querförderschnecke 12 fallen. Sie fördert von beiden Seiten her zur Mitte, wo dann die Übergabe der geernteten Maiskolben an die Erntemaschine erfolgt.

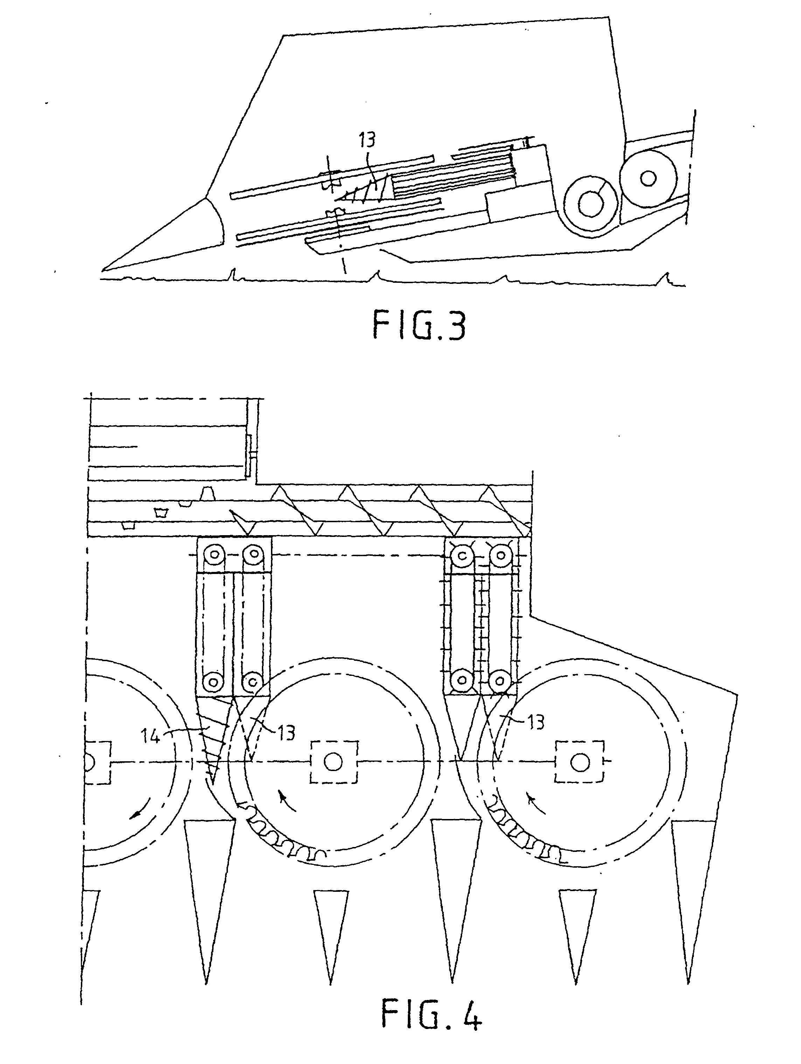

Das Ausführungsbeispiel nach den Figuren 3 und 4 unterscheidet sich von dem vorhergehenden im Wesentlichen dadurch, daß keine Ausräumscheiben vorgesehen sind. Statt dessen tauchen die beiden Pflückaggregate mit ihrer jeweils rechten Einzugspitze 13 in den Laufkreis der jeweils zugeordneten Förderscheibe 1 ein. Hier wirkt die Einzugspitze 13 als Ausräumer. Das linke Pflückaggregat zeigt als alternatives Merkmal die Besonderheit, daß die linke Einzugspitze 14, die zwischen den beiden Förderscheiben freiliegt, länger ist, als die andere Einzugspitze des gleichen Pflückaggregats. Die Seitenansicht nach Fig. 3 läßt erkennen, daß die Einzugspitze 13 höhenmäßig zwischen die obere und untere Förderscheibe eintaucht.

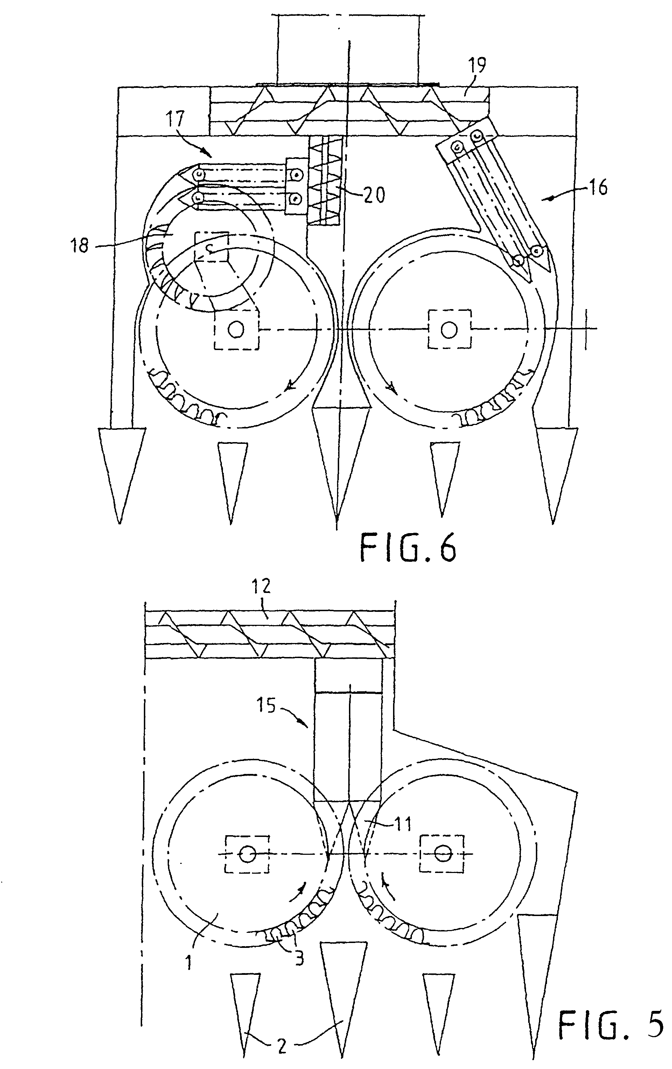

Das Ausführungsbeispiel nach Fig. 5 zeigt eine spiegelsymmetrische Anordnung von zwei gegensinnig laufenden Förderscheiben 1. Gegensinnig bedeutet in diesem Fall, daß die frontseitig von den Förderscheiben aufgenommenen Pflanzen als zwei zusammenlaufende Gutströme in den Zwickelbereich hineingefördert werden. Dort vereinen sich die Gutströme und werden gemeinsam von dem besonders leistungsfähig ausgelegten Pflückaggregat 15 aufgenommen und verarbeitet. Beide Einzugspitzen 11 tauchen in den Laufkreis der jeweiligen Förderscheibe ein. Da die Förderscheibenachsen genau in einer rechtwinklingen Querebene liegen, verläuft der Pflückspalt genau in Fahrtrichtung.

Die Fig. 6 zeigt weitere Alternativen auf. Jede der beiden Seiten der Figur stellt ein eigenes Beispiel dar und ist daher getrennt zu betrachten.

In der rechten Hälfte der Figur ist ein Pflückaggregat 16 schräg zur Fahrtrichtung angeordnet. Die Erntegut-Übernahme entspricht derjenigen nach Fig. 4, jedoch verbleibt das Erntegut länger in der Förderscheibe und wird weiter herumgeführt. An der Außenseite des Vorsatzgeräts hat diese Anordnung den Vorteil, daß die Querförderschnecke kürzer sein kann. Auch auf die Länge des Vorsatzgeräts hat die Anordnung einen eher vorteilhaften Einfluß.

Die Queranordnung des Pflückaggregats 17 in der linken Hälfte der Fig. 6 läßt dagegen - bei konstruktiver Durchbildung - eine erhebliche Verkürzung des Vorsatzgeräts erwarten. Hier ist wiederum eine Ausräumscheibe 18 vorgesehen, die in einem Bogen zwischen die Einzugspitzen des Pflückaggregats fördert. Die gepflückten Maiskolben müssen schließlich in die Querförderschnecke 19 gelangen. Im Beispiel ist hierzu eine weitere nach hinten fördernde Schnecke 20 vorgesehen, die aber möglicherweise durch eine einfache Rutsche ersetzt werden könnte, zumal dann, wenn die Möglichkeit zur Verkürzung des Vorsatzgeräts voll ausgenutzt wird.

## Patentansprüche

1. Maisernte-Vorsatzgerät zum Anbau an eine selbstfahrende Erntemaschine mit einem reihenunabhängig funktionierenden Stengelmähwerk, das um zumindest hochstehende Achsen umlaufende Messerscheiben (4) aufweist, welche die abgemähten stehenden Pflanzen zu einzelnen Einzugsbereichen fördern, **dadurch gekennzeichnet, daß** dem Stengelmähwerk Pflückaggregate (6) nachgeordnet sind, welche die Maiskolben von den Pflanzen trennen und einer gesonderten Verwertung zuführen, wobei jedem Einzugsbereich ein Pflückaggregat (6) zugeordnet ist.

2. Vorsatzgerät nach Anspruch 1, **dadurch gekennzeichnet, daß** jeder Förderscheibe (1) eine achsparallele gezahnte Ausräumscheibe (5) zugeordnet ist, welche das von der Förderscheibe angeförderte Erntegut einem Pflückaggregat (6, 17) zuführt.

3. Vorsatzgerät nach Anspruch 1, **dadurch gekennzeichnet, daß** die Pflückaggregate im Bereich ihres Guteinzuges (13) als Ausräumer wirkend in den Laufkreis der zugeordneten Förderscheibe (1) eintauchen.

4. Vorsatzgerät nach Anspruch 1, **dadurch gekennzeichnet, daß** die Pflückaggregate (6) je einen zwischen zwei Kanten gebildeten Pflückspalt (8) aufweisen, der etwa in Richtung einer Tangente an den Laufkreis der Förderscheiben (1) oder Ausräumscheiben (5) verläuft.

5. Vorsatzgerät nach Anspruch 1, **dadurch gekennzeichnet, daß** zwei nebeneinanderliegende Förderscheiben (1) des Mähwerks gegensinnig rotieren und ihre beiden zusammenlaufenden Gutströme gemeinsam von einem hinter dem Einlaufzwickel der Förderscheiben angeordneten Pflückaggregat (15) aufgenommen werden.

6. Vorsatzgerät nach Anspruch 1, **dadurch gekennzeichnet, daß** Pflückaggregate mit geradlinigen Pflückspalten schräg (16) oder quer (17) zur Fahrtrichtung hinter den Förderscheiben (1) angeordnet sind.

7. Vorsatzgerät nach Anspruch 1, **dadurch gekennzeichnet, daß** die Pflückaggregate (6) zwei unter dem Pflückspalt (8) angeordnete Pflückwalzen aufweisen, von denen eine mit ihrer kegeligen Einzugspitze (13) in den Laufkreis der zugeordneten Förderscheibe (1) tangential eintaucht, während die Einzugspitze der anderen Pflückwalze außerhalb des Laufkreises liegt.

8. Vorsatzgerät nach Anspruch 7, **dadurch gekennzeichnet, daß** die außerhalb des Laufkreises liegende Einzugspitze (14) länger ist als die eintauchende Einzugspitze.

9. Vorsatzgerät nach Anspruch 1, **dadurch gekennzeichnet, daß** die Pflückaggregate nur je eine mit einer Teilummantelung zusammenwirkende Pflückwalze aufweisen.

10. Vorsatzgerät nach Anspruch 1, **dadurch gekennzeichnet, daß** im oberen Bereich der Pflückaggregate je eine oder zwei Förderschnecken oder endlose Förderketten (9) angeordnet sind, welche die gepflückten Maiskolben bzw. die noch über den Pflückspalt herausstehenden Pflanzen in Spaltrichtung weiterfördern.

11. Vorsatzgerät nach Anspruch 9, **dadurch gekennzeichnet, daß** die Pflückwalze in Achsebene verlaufende Schlagplatten aufweist, die mit senkrecht zu der Achse feststehenden Messern zusammenwirken, um die Pflanzen vor dem Auswerfen nach unten zu zerstückeln.

12. Vorsatzgerät nach Anspruch 1, **dadurch gekennzeichnet, daß** unter den Pflückaggregaten Zerkleinerungseinrichtungen für die durch den Pflückspalt (8) durchgezogenen kolbenlosen Maispflanzen vorgesehen sind.

13. Vorsatzgerät nach Anspruch 1, **dadurch gekennzeichnet, daß** im hinteren Bereich des Vorsatzgeräts eine Querförderschnecke (12) vorgesehen ist, welche die abgepflückten Maiskolben von den Pflückaggregaten beider Seiten zur Mitte fördert, von wo sie gesammelt in die das Vorsatzgerät tragende Erntemaschine überführt werden.

## Claims

1. A front-mounted corn harvesting implement for mounting to a self-propelled harvester with a stalk cutting mechanism which functions independently of rows and which has cutter discs (4) rotating about at least upright axes and conveying the cut standing plants to individual draw-in regions, **characterised in that** arranged downstream of the stalk cutting mechanism are picking units (6) which separate the corn cobs from the plants and feed them to a separate use, wherein a picking unit (6) is associated with each draw-in region.

2. A front-mounted implement according to claim 1 **characterised in that** associated with each conveyor disc (1) is a toothed removal disc (5) which is parallel to the axis and which feeds a plucking unit (6, 17) with the crop material conveyed thereto by the conveyor disc.

3. A front-mounted implement according to claim 1 **characterised in that** the picking units in the region of their material intake (13), acting as removal devices, engage into the orbit of the associated conveyor disc (1).

4. A front-mounted implement according to claim 1 **characterised in that** the picking units (6) have a respective picking gap (8) which is formed between two edges and which extends approximately in the direction of a tangent to the orbit of the conveyor discs (1) or removal discs (5).

5. A front-mounted implement according to claim 1 **characterised in that** two mutually juxtaposed conveyor discs (1) of the cutting mechanism rotate in opposite relationship and their two converging flows of material are jointly received by a picking unit (15) arranged behind the entry nip of the conveyor discs.

6. A front-mounted implement according to claim 1 **characterised in that** picking units with straight picking gaps are arranged inclinedly (16) or transversely (17) with respect to the direction of travel behind the conveyor discs (1).

7. A front-mounted implement according to claim 1 **characterised in that** the picking units (6) have two picking rollers which are arranged under the picking gap (8) and of which one engages tangentially with its conical draw-in tip (13) into the orbit of the associated conveyor disc (1) while the draw-in tip of the other picking roller lies outside the orbit.

8. A front-mounted implement according to claim 7 **characterised in that** the draw-in tip (14) which is outside the orbit is longer than the draw-in tip which engages into the orbit.

9. A front-mounted implement according to claim 1 **characterised in that** the picking units have only one respective picking roller co-operating with a partial enclosure.

10. A front-mounted implement according to claim 1 **characterised in that** arranged in the upper region of the respective picking units are one or two conveyor screws or endless conveyor chains (9) which further convey in the gap direction the picked corn cobs or the plants which still project above the picking gap.

11. A front-mounted implement according to claim 9 **characterised in that** the picking roller has beater plates which extend in the plane of the axis and which co-operate with blades which are stationary perpendicularly to the axis, in order to divide up the plants before ejection in a downward direction.

12. A front-mounted implement according to claim 1 **characterised in that** provided beneath the picking units are crushing devices for the cob-less corn plants which are drawn through the picking gap (8).

13. A front-mounted implement according to claim 1 **characterised in that** provided in the rear region of the front-mounted implement is a transverse conveyor screw (12) which conveys the plucked-off corn cobs from the picking units of both sides to the centre from where they are transferred in a collected condition into the harvester carrying the front-mounted implement.

## Revendications

1. Bec maïs destiné à être monté sur une machine de récolte automotrice, avec un mécanisme de coupe de tiges dont le fonctionnement est indépendant des rangs et qui présente des disques de coupe (4) tournant autour d'axes au moins surélevés qui assurent le transport des plantes coupées droites vers les différentes zones d'alimentation, **caractérisé en ce que** des organes de cueillage (6) sont disposés à la suite du mécanisme de coupe, lesquels organes de cueillage séparent les épis de maïs des plantes et les acheminent vers un moyen de traitement séparé, un organe de cueillage (6) étant associé à chacune des zones d'alimentation.

2. Bec maïs selon la revendication 1, **caractérisé en ce qu'**à chaque disque de transport (1) est associé un disque d'évacuation (5), les axes des disques étant parallèles, qui achemine vers un organe de cueillage (6, 17) le produit récolté délivré par le disque de transport.

3. Bec maïs selon la revendication 1, **caractérisé en ce que** les organes de cueillage, dans la région de leur entrée, pénètrent dans le cercle de trajectoire des disques de transport associés et se comportent en moyens d'évacuation.

4. Bec maïs selon la revendication 1, **caractérisé en ce que** les organes de cueillage (6) comportent chaque fois une fente de cueillage (8) formée entre deux bords, qui s'étend sensiblement dans la direction d'une tangente au cercle de trajectoire des disques de transport (1) ou des disques d'évacuation (5).

5. Bec maïs selon la revendication 1, **caractérisé en ce que** deux disques de transport (1) disposés l'un à côté de l'autre du mécanisme de coupe tournent dans des sens opposés et leurs deux flux de produit qui convergent sont pris en charge conjointement par un organe de cueillage (15) disposé derrière la zone d'entrée des disques de transport .

6. Bec maïs selon la revendication 1, **caractérisé en ce que** des organes de cueillage avec des fentes de cueillage rectilignes sont disposés en biais (16) ou transversalement (17) à la direction de déplacement derrière les disques de transport (1)

7. Bec maïs selon la revendication 1, **caractérisé en ce que** les organes de cueillage (6) comportent deux cylindres de cueillage disposés sous la fente de cueillage (8), parmi lesquels l'un pénètre avec son extrémité d'entrée (13) conique tangentiellement dans le cercle de trajectoire du disque de transport (1) associé, tandis que l'extrémité d'entrée de l'autre cylindre de cueillage est située hors du cercle de trajectoire.

8. Bec maïs selon la revendication 7, **caractérisé en ce que** l'extrémité d'entrée (14) du cylindre de cueillage située à l'extérieur du cercle de trajectoire est plus longue que l'extrémité d'entrée rentrant dans ledit cercle de trajectoire.

9. Bec maïs selon la revendication 1, **caractérisé en ce. que** les organes de cueillage ne comportent chacun qu'un cylindre de cueillage qui coopère avec une enveloppe partielle.

10. Bec maïs selon la revendication 1, **caractérisé en ce que** dans la région supérieure des organes de cueillage sont disposées chaque fois une ou deux vis transporteuses ou chaînes transporteuses (9) sans fin, qui transportent dans la direction de la fente les épis de maïs coupés ou les plantes qui se trouvent encore au-dessus de la fente de cueillage.

11. Bec maïs selon la revendication 9, **caractérisé en ce que** le cylindre de cueillage présente des plaques de battage qui s'étendent dans le plan de l'axe et coopèrent avec des couteaux fixes disposés perpendiculairement à l'axe aux fins de réduire les plantes en morceaux avant leur éjection vers la bas.

12. Bec maïs selon la revendication 1, **caractérisé en ce qu'**il est prévu, sous les organes de cueillage, des dispositifs de broyage pour les plantes sans épis ayant traversé la fente de cueillage (8).

13. Bec maïs selon la revendication 1, **caractérisé en ce qu'**il est prévu, dans la zone arrière du bec maïs, une vis transporteuse transversale (12) qui transporte les épis de maïs récoltés des organes de cueillage, des deux côtés vers le centre, d'où ils sont acheminés groupés dans la machine de récolte portant le bec maïs.
